# EUROPÄISCHE PATENTSCHRIFT

(11) **EP 3 160 771 B1**
(45) Veröffentlichungstag und Bekanntmachung des Hinweises auf die Patenterteilung: **13.06.2018**
(21) Anmeldenummer: 15741920.1
(22) Anmeldetag: 07.04.2015
(51) Int. Cl.: B60C 11/117, B60C 11/13, B60C 11/12, B60C 11/03, B60C 11/04

(54) **FAHRZEUGLUFTREIFEN**
VEHICLE PNEUMATIC TIRE
PNEUMATICE DE VEHICULE

(30) Priorität: 26.06.2014 DE 102014212349
(43) Veröffentlichungstag der Anmeldung: 03.05.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/057428
(87) Internationale Veröffentlichungsnummer: WO 2015/197211

(56) Entgegenhaltungen:
- EP-A1- 2 154 008
- EP-A1- 2 724 872
- WO-A1-2010/041283
- DE-A1-102012 108 383

## Beschreibung

Die Erfindung betrifft einen Fahrzeugluftreifen mit einem Laufstreifen, welcher durch Rillen, wie Umfangsrillen, Diagonalrillen und dergleichen, in Profilpositive gegliedert ist, wobei in zumindest einem Profilpositiv Rillen ausgebildet sind, welche sich lokal im Profilpositiv erstrecken ohne in andere Rillen einzumünden.

Ein derartiger Fahrzeugluftreifen ist beispielsweise aus der DE 10 2012 108 383 A1 bekannt. Dabei bilden jeweils drei Rillenabschnitte eine Gruppe von Rillenabschnitten, welche von einem vertieften Zentralbereich ausgehend im Wesentlichen analog zu den Zacken eines regulären Sterns verlaufen, wobei einer der Rillenabschnitte in axialer oder im Wesentlichen in axialer Richtung des Laufstreifens verläuft. Derartige Rillen sollen die Performance des Reifens auf trockener Fahrbahn gleichermaßen wie die Performance des Reifens auf nasser Fahrbahn verbessern. Durch die in Gruppen angeordneten Rillenabschnitte wird eine Vielzahl von Kanten, daher in Summe eine große Kantenlänge und gleichzeitig ein erhöhtes Negativvolumen zur Verfügung gestellt. Durch die sternförmige Anordnung der Rillenabschnitte lässt sich zwar die Steifigkeit der Profilpositive derart beeinflussen, dass der Reifen eine gute Performance auf trockenen und nassen Fahrbahnen aufweist, es wurde jedoch ein Verbesserungsbedarf hinsichtlich der Performance auf nassen Fahrbahnen, insbesondere was das Bremsverhalten auf Nässe und das Wasserableitvermögen betrifft, und hinsichtlich des Abrollgeräusches festgestellt.

Aus WO 2010/041283 A1 ist ein Motorradreifen bekannt, dessen Laufstreifen Rillen mit V-förmig zueinander verlaufenden Rillenabschnitten aufweist, wobei diese Rillen die einzigen Rillen sind und der Laufstreifen daher nicht in Profilpositive gegliedert ist. Die EP 2 154 008 A1 offenbart einen Fahrzeugluftreifen mit einem Laufstreifen, welcher durch Rillen begrenzte Profilpositive aufweist. In den Profilpositiven verlaufen in Draufsicht V-förmige Rillen, welche mit zumindest einem ihrer Enden in eine das jeweilige Profilpositiv begrenzende Rille einmünden.

Der Erfindung liegt daher die Aufgabe zugrunde, einen Fahrzeugluftreifen der eingangs genannten Art diesbezüglich zu verbessern und den Zielkonflikt zwischen Maßnahmen zur Verbesserung des Bremsverhaltens auf nassem Untergrund und Maßnahmen zur Verringerung des Abrollgeräusches besser als bisher zu lösen.

Gelöst wird die gestellte Aufgabe erfindungsgemäß dadurch, dass die Rillen aus zwei V-förmig zueinander verlaufenden Rillenabschnitten bestehen, die einen spitzen Winkel von 20° bis 35° miteinander einschließen und im Wesentlichen in Laufstreifenquerrichtung orientiert sind, wobei der eine Rillenabschnitt eine um das Zwei- bis Dreieinhalbfache größere Erstreckungslänge aufweist als der andere Rillenabschnitt, wobei der die größere Erstreckungslänge aufweisende Rillenabschnitt am Übergangsbereich seiner bezogen auf den V-förmigen Verlauf innenseitigen Rillenflanke zur Profilaußenfläche mit einer unter einem Winkel von 25° bis 50° zur radialen Richtung verlaufenden Fase versehen ist und wobei der Rillengrund jedes Rillenabschnittes zum freien Ende des jeweiligen Rillenabschnittes zu kontinuierlich ansteigt und an der Laufstreifenaußenfläche ausläuft.

Die erfindungsgemäße und spezielle Ausgestaltung der Rillen ermöglicht es, in Abstimmung mit der Anordnung dieser Rillen in Profilpositiven, gezielt die Entwässerung, beispielsweise in Umfangsrillen, zu unterstützen. Insbesondere die Fase im Rillenabschnitt mit der größeren Erstreckung begünstigt eine gezielte Ableitung von Wasser aus der Bodenaufstandsfläche des Reifens beim Abrollen. Vorteilhaft ist zudem auch die Anzahl der für gute Nassbremseigenschaften zur Verfügung stehenden Kanten der beiden Rillenabschnitte. Die kurz ausführbaren Kanten der Rillenabschnitte sorgen zudem für ein geringes Abrollgeräusch.

Gemäß einer bevorzugten Ausführungsform der Erfindung befinden sich im Bereich der V-Spitze die Rillengründe der beiden Rillenabschnitte in übereinstimmenden Tiefen in der Größenordnung von 5 mm bis 8 mm. Diese Maßnahme ist für eine möglichst verwirbelungsfreie Ableitung von Wasser aus der Bodenaufstandsfläche vorteilhaft.

Weitere Maßnahmen, die ein verwirbelungsfreies Ableiten von Wasser aus der Bodenaufstandsfläche beim Abrollen des Reifens unterstützen, bestehen darin, dass der kürzere Rillenabschnitt, bezogen auf die V-Form der Rille, innenseitig eine im Wesentlichen in radialer Richtung verlaufende Rillenflanke aufweist und außenseitig von einer unter einem Winkel von bis zu 10° zur radialen Richtung verlaufenden Rillenflanke begrenzt ist und dass der längere Rillenabschnitt, bezogen auf die V-Form der Rille, außenseitig von einer Rillenflanke begrenzt ist, die unter einem Winkel von bis zu 10° zur radialen Richtung verläuft.

Besondere Anordnungen der erfindungsgemäßen Rillen im Laufstreifen von Fahrzeugluftreifen sind für gute Aquaplaningeigenschaften, insbesondere für ein gutes Bremsverhalten auf nassem Untergrund, und auch für ein geringes Abrollgeräusch besonders vorteilhaft. In in Umfangsrichtung verlaufenden Profilpositiven, insbesondere Profilbändern, die beidseitig von einer Umfangsrille begrenzt sind, ist es günstig, wenn die aus zwei V-förmig zueinander verlaufenden Rillenabschnitten bestehenden Rillen in zwei Reihen angeordnet sind, wobei in jeder Reihe die V-Spitzen übereinstimmend zur Profilpositiv- bzw. Profilbandmitte weisen. Für die Aquaplaningeigenschaften ist es besonders vorteilhaft, wenn die Ausrichtung der längeren und kürzeren Rillenabschnitte der Rillen in der einen Reihe entgegen jener der Rillenabschnitte der Rillen in der anderen Reihe ist.

In schulterseitig verlaufenden Profilbändern, über welche eine gute Entwässerung sowohl zur Umfangsrille als auch zum Laufstreifenrand erfolgen soll, ist es vorteilhaft, wenn die aus V-förmig zueinander verlaufenden Rillenabschnitten bestehenden Rillen in drei Reihen verlaufen, wobei in jeder Reihe die V-Spitzen sämtlicher Rillen zur Umfangsrille weisen. Dabei wird das Abrollgeräusch besonders vorteilhaft beeinflusst, wenn die Rillen in der mittleren Reihe gegenüber den Rillen in den beiden anderen Reihen in Umfangsrichtung versetzt sind und wenn die längeren und kürzeren Rillenabschnitte der Rillen in der mittleren Reihe entgegen zu jenen der Rillen in den beiden anderen Reihen ausgerichtet sind.

Weitere Merkmale, Vorteile und Einzelheiten der Erfindung werden nun anhand der Zeichnung, die Ausführungsbeispiele darstellt, näher beschrieben. Dabei zeigen
Fig. 1 schematisch eine Draufsicht auf einen Umfangsabschnitt zweier Profilbänder eines Laufstreifens eines Fahrzeugluftreifens,
Fig. 2 einige Rillen aus Fig. 1 in vergrößerter Darstellung,
Fig. 3 einen Schnitt entlang der Linie III-III der Fig. 2,
Fig. 4 einen Schnitt entlang der Linie IV-IV der Fig. 2 und
Fig. 5 einen Schnitt entlang der Linie V-V der Fig. 2.

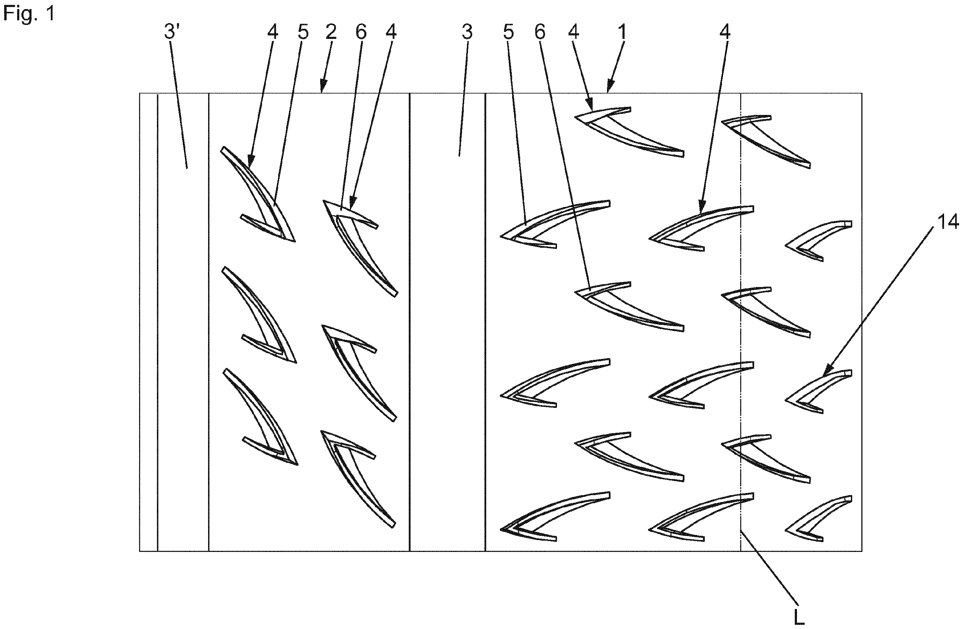

Fig. 1 zeigt zwei Profilbänder 1, 2 eines Laufstreifenprofils eines Fahrzeugluftreifens in radialer Bauart für einen PKW, Van oder dergleichen. Die beiden Profilbänder 1, 2 sind voneinander durch eine hier beispielhaft gerade und in Umfangsrichtung umlaufende Umfangsrille 3 voneinander getrennt. Das in Fig. 1 weiter rechts befindliche Profilband 1 verläuft bei der gezeigten Ausführungsform schulterseitig, die gestrichelte Linie L versinnbildlicht die Lage des hier befindlichen äußeren Randes des bodenberührenden Teils des Laufstreifens, wobei der bodenberührende Teil dem statisch ermittelten Footprint gemäß E.T.R.T.O.-Standards (Last bei 70 % der Tragfähigkeit bei einem Innendruck von 2,5 bar und bei einem Innendruck von 85 % von 2,5 bar) entspricht. Das Profilband 2 ist von den weiteren, nicht dargestellten Bereichen des Laufstreifens beispielhaft ebenfalls durch eine breite, in Umfangsrichtung umlaufende Umfangsrille 3' getrennt. Der nicht dargestellte Bereich des Laufstreifens kann mit weiteren, erfindungsgemäß oder nicht erfindungsgemäß ausgeführten Profilstrukturen, wie Profilbändern, Blockreihen und dergleichen, versehen sein. Die Profilbänder 1 und 2 können die für Profilbänder im Laufstreifen von PKW-Reifen üblichen Breiten aufweisen, wobei die Breite des Profilbandes 1 insbesondere in der Größenordnung von 25 mm bis 50 mm, jene des Profilbandes 2 insbesondere in der Größenordnung von 16 mm bis 32 mm beträgt.

In der nachfolgenden Beschreibung wird unter Tiefe bzw. Profiltiefe jeweils der in radialer Richtung ermittelte Abstand zwischen der Oberfläche des Profilbandes 1, 2 und der jeweils erwähnten Stelle, beispielsweise ein Rillengrund, verstanden. Die Umfangsrillen 3, 3' weisen üblicherweise die für den betreffenden Laufstreifen vorgesehene maximale Profiltiefe, welche in der Größenordnung zwischen 6,0 mm und 8,5 mm gewählt wird, auf, die Breite der Umfangsrillen 3, 3' kann in der Größenordnung von 4 mm bis 8 mm betragen.

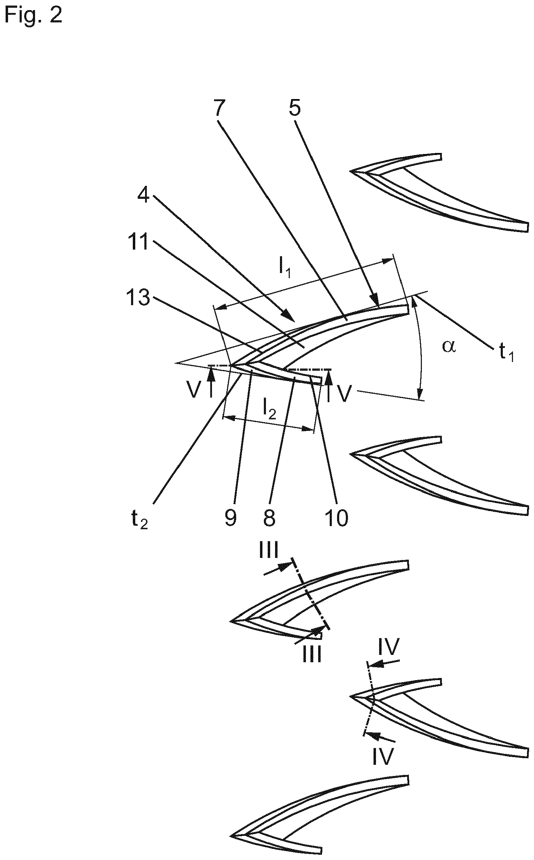

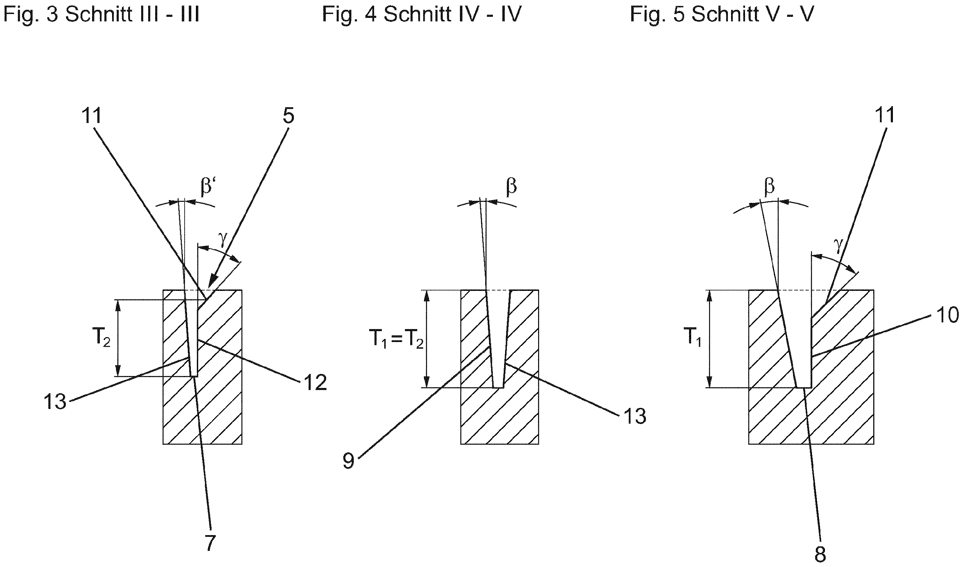

In den Profilbändern 1 und 2 sind besonders gestaltete, zueinander V-förmig verlaufende Rillenabschnitte 5, 6 aufweisende Rillen 4 angeordnet. Die besondere Ausgestaltung dieser V-förmig zueinander verlaufenden Rillenabschnitte 5, 6 wird nun anhand der Figuren 2 bis 5 näher erläutert. Jeder Rillenabschnitt 5, 6 weist jeweils einen, bezogen auf die V-Form, leicht nach außen gewölbten bogenförmigen Verlauf auf. Jeder Rillenabschnitt 5, 6 weist ferner einen Rillengrund 7, 8 auf, dessen Breite 0,8 mm bis 1,2 mm beträgt, wobei der Rillengrund 8 im Rillenabschnitt 6 eine im Wesentlichen konstante Breite aufweist, der Rillengrund 7 im Rillenabschnitt 5 wird zum freien Ende des Rillenabschnittes 5 zu geringfügig und kontinuierlich breiter. Bezogen auf die Erstreckung des jeweiligen Rillenabschnittes 5, 6 von der V-Spitze aus weist der Rillenabschnitt 5 eine Erstreckungslänge l₁ auf, die das Zwei- bis Dreieinhalbfache der Erstreckungslänge l₂ des Rillenabschnittes 6 beträgt, welche zwischen 3 mm und 6 mm gewählt wird. Tangenten t₁ und t₂, die jeweils die äußere Begrenzungskante des jeweiligen Rillenabschnittes 5, 6 in der Mitte der Erstreckung des Rillenabschnittes 5, 6 berühren, schließen miteinander einen Öffnungswinkel α ein, welcher im Rahmen der Erfindung als der Winkel, unter welchem die beiden Rillenabschnitte 5, 6 zueinander verlaufen, definiert ist und 20° bis 35° beträgt. Sowohl der Rillengrund 7 als auch der Rillengrund 8 verringern ihre Tiefen T₁, T₂ ausgehend von der V-Spitze an der Schnittstelle des Rillengrundes 7 mit dem Rillengrund 8, derart, dass die Tiefe T₂ an der Schnittstelle der Tiefe T₁ und 5mm bis 8 mm, insbesondere 7 mm, entspricht und in Richtung freies Ende des Rillenabschnittes 5, 6 kontinuierlich geringer wird, derart, dass am freien Ende der Rillengrund 7 und der Rillengrund 8 in die Laufstreifenaußenfläche auslaufen.

Der kurze Rillenabschnitt 6 ist - bezogen auf die V-Form der Rille 4 - außenseitig von einer Rillenflanke 9 begrenzt, die an der V-Spitze unter einem spitzen Winkel β zur radialen Richtung verläuft, welcher 3° bis 10°, insbesondere etwa 5°, beträgt. Die innenseitig befindliche Rillenflanke 10 verläuft in radialer Richtung, wobei sich diese Rillenflanke 10 mit einer Fase 11 trifft, die den Rillenabschnitt 5 innenseitig zur Laufstreifenaußenfläche begrenzt. Die Fase 11 geht in eine Rillenflanke 12 über, welche in radialer Richtung zum Rillengrund 7 verläuft und deren radiale Erstreckung vom Bereich der V-Spitze der Rille 4 bis zum freien Ende des Rillenabschnittes 5 kontinuierlich geringer wird. Die Fase 11 verläuft unter einem Winkel y von 25° bis 50°, insbesondere von 35°, zur radialen Richtung. Die Fase 11 ist eine in Erstreckungsrichtung des Rillenabschnittes 5 verlaufende, langgestreckte, im Wesentlichen dreieckförmige Fläche. Der Rillenabschnitt 5 ist außenseitig von einer Rillenflanke 13 begrenzt, die im Wesentlichen analog zur Rillenflanke 9 verläuft und daher an der Spitze der V-Form der Rille 4 einen Winkel β', dessen Größe jener des erwähnten Winkels β entspricht, mit der radialen Richtung einschließt und welcher über die Erstreckung des Rillenabschnittes 5 kontinuierlich geringer wird, bis die Rillenflanke 13 in radialer Richtung verlaufend am Ende des Rillenabschnittes 5 ausläuft.

Fig. 1 zeigt bevorzugte Anordnungen der Rillen 4 in den Profilbändern 1 und 2. Im Profilband 2 sind die Rillen 4 in zwei in Umfangsrichtung verlaufenden Reihen angeordnet, wobei in jeder Reihe die V-Spitzen übereinstimmend zur Profilbandmitte weisen und wobei in der einen Reihe die kurzen Rillenabschnitte 6 der einen Umfangsrichtung und in der zweiten Reihe die kurzen Rillenabschnitte 6 der zweiten Umfangsrichtung zugewandt sind. In Querrichtung betrachtet ist jeweils eine Rille 4 in der einen Reihe einer Rille 4 in der anderen Reihe paarweise zugeordnet, wobei die V-Spitzen dieser Rillen 4 in Umfangsrichtung gegeneinander versetzt sind.

Im Profilband 1 sind die Rillen 4 in drei Reihen angeordnet, wobei die V-Spitzen sämtlicher Rillen 4 in Richtung Umfangsrille 3 weisen. In den beiden äußeren Reihen sind die Rillen 4 bezüglich der Ausrichtung und des Verlaufs der längeren und kürzeren Rillenabschnitte 5, 6 übereinstimmend angeordnet, in der mittleren Reihe ist die Ausrichtung der längeren und kürzeren Rillenabschnitte 5, 6 entgegen jener der in den Rillen 4 der beiden anderen Reihen. Darüber hinaus ist die Anordnung derart, dass die in der mittleren Reihe verlaufenden Rillen 4 in Umfangsrichtung gegenüber den im Wesentlichen parallel zueinander verlaufenden Rillen 4 der beiden anderen Reihen versetzt sind. Auf diese Weise kann im Profilband 1 eine größere Anzahl von erfindungsgemäß ausgeführten Rillen 4 angeordnet werden. Jenseits des Laufstreifenrandes eine Struktur mit optisch ähnlichen V-förmigen Rillen 14 vorhanden, welche seichter ausgeführt sind als die Rillen 4.

### Bezugsziffernliste

- 1: Profilband
- 2: Profilband
- 3, 3': Umfangsrille
- 4: Rille
- 5: Rillenabschnitt
- 6: Rillenabschnitt
- 7: Rillengrund
- 8: Rillengrund
- 9: Rillenflanke
- 10: Rillenflanke
- 11: Fase
- 12: Rillenflanke
- 13: Rillenflanke
- 14: Rille
- l₁, l₂: Erstreckungslänge
- L: Laufstreifenrand
- T₁, T₂: Tiefe
- t₁, t₂: Tangente
- α, β, β', γ: Winkel

## Patentansprüche

1. Fahrzeugluftreifen mit einem Laufstreifen, welcher durch Rillen, wie Umfangsrillen (3, 3'), Diagonalrillen und dergleichen, in Profilpositive gegliedert ist, wobei in zumindest einem Profilpositiv Rillen (4) ausgebildet sind, welche sich lokal im Profilpositiv erstrecken ohne in andere Rillen einzumünden,
**dadurch gekennzeichnet,**
**dass** die Rillen (4) aus zwei V-förmig zueinander verlaufenden Rillenabschnitten (5, 6) bestehen, die einen spitzen Winkel (α) von 20° bis 35° miteinander einschließen und im Wesentlichen in Laufstreifenquerrichtung orientiert sind, wobei der eine Rillenabschnitt (5) eine um das Zwei- bis Dreieinhalbfache größere Erstreckungslänge (l₁) aufweist als der andere Rillenabschnitt (6), wobei der die größere Erstreckungslänge (l₁) aufweisende Rillenabschnitt (5) am Übergangsbereich seiner bezogen auf den V-förmigen Verlauf innenseitigen Rillenflanke (10) zur Profilaußenfläche mit einer unter einem Winkel (γ) von 25° bis 50° zur radialen Richtung verlaufenden Fase (11) versehen ist und wobei der Rillengrund (7, 8) jedes Rillenabschnittes (5, 6) zum freien Ende des jeweiligen Rillenabschnittes (5, 6) zu kontinuierlich ansteigt und an der Laufstreifenaußenfläche ausläuft.

2. Fahrzeugluftreifen nach Anspruch 1, **dadurch gekennzeichnet, dass** sich im Bereich der V-Spitze die Rillengründe (7, 8) der beiden Rillenabschnitte (5, 6) in einer Tiefe (T₁, T₂) von 5 mm bis 8 mm befinden.

3. Fahrzeugluftreifen nach Anspruch 1 oder 2, **dadurch gekennzeichnet, dass** der kürzere Rillenabschnitt (6), bezogen auf die V-Form der Rille (4), innenseitig eine im Wesentlichen in radialer Richtung verlaufende Rillenflanke (10) aufweist und außenseitig von einer unter einem Winkel (β) von bis zu 10° zur radialen Richtung verlaufenden Rillenflanke (9) begrenzt ist.

4. Fahrzeugluftreifen nach einem der Ansprüche 1 bis 3, **dadurch gekennzeichnet, dass** der längere Rillenabschnitt (5), bezogen auf die V-Form der Rille (4), außenseitig von einer Rillenflanke (13) begrenzt ist, die unter einem Winkel (ß') von bis zu 10° zur radialen Richtung verläuft.

5. Fahrzeugluftreifen mit zumindest einem in Umfangsrichtung des Laufstreifens umlaufenden Profilband (1, 2) als Profilpositiv, welches an zumindest einer Seite von einer in Umfangsrichtung umlaufenden Umfangsrille (3, 3') begrenzt ist, nach einem der Ansprüche 1 bis 4, **dadurch gekennzeichnet, dass** im Profilband (1, 2) die aus V-förmig zueinander verlaufenden Rillenabschnitten (5, 6) bestehenden Rillen (4) in zwei oder drei in Umfangsrichtung umlaufenden Reihen angeordnet sind.

6. Fahrzeugluftreifen mit einem beidseitig von Umfangsrillen (3, 3') begrenzten, in Umfangsrichtung umlaufenden Profilband (2) nach einem der Ansprüche 1 bis 5, **dadurch gekennzeichnet, dass** im Profilband (2) die aus V-förmig zueinander verlaufenden Rillenabschnitten (5, 6) bestehenden Rillen (4) in zwei Reihen verlaufen, wobei in jeder Reihe die V-Spitzen übereinstimmend zur Profilbandmitte weisen.

7. Fahrzeugluftreifen nach Anspruch 6, **dadurch gekennzeichnet, dass** die Ausrichtung der längeren und kürzeren Rillenabschnitte (5, 6) der Rillen (4) in der einen Reihe entgegen jener der Rillenabschnitte (5, 6) der Rillen (4) in der anderen Reihe ist.

8. Fahrzeugluftreifen mit einem schulterseitig verlaufenden Profilband (1), welches laufstreifeninnenseitig von einer Umfangsrille (3) begrenzt ist, nach einem der Ansprüche 1 bis 5, **dadurch gekennzeichnet, dass** im Profilband (2) die aus V-förmig zueinander verlaufenden Rillenabschnitten (5, 6) bestehenden Rillen (4) in drei Reihen verlaufen, wobei in jeder Reihe die V-Spitzen sämtlicher Rillen (4) zur Umfangsrille (3) weisen.

9. Fahrzeugluftreifen nach Anspruch 8, **dadurch gekennzeichnet, dass** die Rillen (4) in der mittleren Reihe gegenüber den Rillen (4) der beiden anderen Reihen in Umfangsrichtung versetzt sind.

10. Fahrzeugluftreifen nach Anspruch 8 oder 9, **dadurch gekennzeichnet, dass** die längeren und kürzeren Rillenabschnitte (5, 6) der Rillen (4) in der mittleren Reihe entgegen zu jenen der Rillen (4) in den beiden anderen Reihen ausgerichtet sind.

## Claims

1. Pneumatic vehicle tyre with a tread, which is divided into profile positives by grooves, such as circumferential grooves (3, 3'), diagonal grooves and the like, grooves (4) that extend locally in the profile positive without entering other grooves being formed in at least one profile positive,
**characterized**
**in that** the grooves (4) consist of two groove portions (5, 6), which run in a V-shaped manner in relation to one another, form an acute angle (α) of 20° to 35° with one another and are oriented substantially in the transverse direction of the tread, the one groove portion (5) having a length of extent (l₁) that is greater by two to three and a half times than the other groove portion (6), the groove portion (5) that has the greater length of extent (l₁) being provided at the transitional region of its groove flank (10) that is on the inside with respect to the V-shaped form to the outer surface of the profile with a bevel (11) running at an angle (γ) of 25° to 50° in relation to the radial direction, and the groove base (7, 8) of each groove portion (5, 6) rising continuously to the free end of the respective groove portion (5, 6) and running out at the outer surface of the tread.

2. Pneumatic vehicle tyre according to Claim 1, **characterized in that**, in the region of the point of the V, the groove bases (7, 8) of the two groove portions (5, 6) are at a depth (T₁, T₂) of 5 mm to 8 mm.

3. Pneumatic vehicle tyre according to Claim 1 or 2, **characterized in that** the shorter groove portion (6), with respect to the V shape of the groove (4), has on the inside a groove flank (10) running substantially in the radial direction and on the outside is delimited by a groove flank (9) running at an angle (β) of up to 10° in relation to the radial direction.

4. Pneumatic vehicle tyre according to one of Claims 1 to 3, **characterized in that** the longer groove portion (5), with respect to the V shape of the groove (4), is delimited on the outside by a groove flank (13), which runs at an angle (β') of up to 10° in relation to the radial direction.

5. Pneumatic vehicle tyre with at least one profile band (1, 2), running in the circumferential direction of the tread, as a profile positive, which is delimited on at least one side by a circumferential groove (3, 3') running around in the circumferential direction, according to one of Claims 1 to 4, **characterized in that**, in the profile band (1, 2), the grooves (4) consisting of groove portions (5, 6) running in a V-shaped manner in relation to one another are arranged in two or three rows that run around in the circumferential direction.

6. Pneumatic vehicle tyre with a profile band (2) that is delimited on both sides by circumferential grooves (3, 3') and runs around in the circumferential direction as claimed in one of claims 1 to 5, **characterized in that**, in the profile band (2), the grooves (4) consisting of groove portions (5, 6) running in a V-shaped manner in relation to one another run in two rows, in each row the points of the Vs all pointing toward the middle of the profile band.

7. Pneumatic vehicle tyre according to Claim 6, **characterized in that** the alignment of the longer and shorter groove portions (5, 6) of the grooves (4) in one row is opposite to that of the groove portions (5, 6) of the grooves (4) in the other row.

8. Pneumatic vehicle tyre with a profile band (1) that runs at the shoulder and is delimited on the inner side of the tread by a circumferential groove (3), according to one of Claims 1 to 5, **characterized in that**, in the profile band (2), the grooves (4) consisting of groove portions (5, 6) running in a V-shaped manner in relation to one another run in three rows, in each row the points of the Vs of all the grooves (4) pointing toward the circumferential groove (3).

9. Pneumatic vehicle tyre according to Claim 8, **characterized in that** the grooves (4) in the middle row are offset in the circumferential direction with respect to the grooves (4) of the two other rows.

10. Pneumatic vehicle tyre according to Claim 8 or 9, **characterized in that** the longer and shorter groove portions (5, 6) of the grooves (4) in the middle row are aligned opposite to those of the grooves (4) in the two other rows.

## Revendications

1. Pneumatique de véhicule comprenant une bande de roulement qui est divisée par des rainures telles que des rainures périphériques (3, 3'), des rainures diagonales et similaires, en profils positifs, des rainures (4) étant réalisées dans au moins un profil positif, lesquelles s'étendent localement dans le profil positif sans déboucher dans d'autres rainures,
**caractérisé en ce que**
les rainures (4) se composent de deux portions de rainure s'étendant l'une vers l'autre en forme de V (5, 6) qui forment entre elles un angle aigu (α) de 20° à 35° et qui sont orientées sensiblement dans la direction transversale de la bande de roulement, l'une des portions de rainure (5) présentant une longueur d'étendue (l₁) deux à trois fois et demie plus grande que l'autre portion de rainure (6), la portion de rainure (5) présentant la plus grande longueur d'étendue (l₁) étant pourvue au niveau de la région de transition de son flanc de rainure (10), intérieur par rapport à l'allure en forme de V, à la surface extérieure de profil, d'un biseau (11) s'étendant suivant un angle (γ) de 25° à 50° par rapport à la direction radiale et le fond de rainure (7, 8) de chaque portion de rainure (5, 6) montant en continu vers l'extrémité libre de la portion de rainure respective (5, 6) et se terminant au niveau de la surface extérieure de la bande de roulement.

2. Pneumatique de véhicule selon la revendication 1, **caractérisé en ce que** dans la région de la pointe en V, les fonds de rainure (7, 8) des deux portions de rainure (5, 6) se trouvent à une profondeur (T₁, T₂) de 5 mm à 8 mm.

3. Pneumatique de véhicule selon la revendication 1 ou 2, **caractérisé en ce que** la portion de rainure plus courte (6), par rapport à la forme en V de la rainure (4), présente du côté intérieur un flanc de rainure (10) s'étendant sensiblement dans la direction radiale et, du côté extérieur, étant limitée par un flanc de rainure (9) s'étendant suivant un angle (β) allant jusqu'à 10° par rapport à la direction radiale.

4. Pneumatique de véhicule selon l'une quelconque des revendications 1 à 3, **caractérisé en ce que** la portion de rainure plus longue (5), par rapport à la forme en V de la rainure (4), est limitée du côté extérieur par un flanc de rainure (13) qui s'étend suivant un angle (β') allant jusqu'à 10° par rapport à la direction radiale.

5. Pneumatique de véhicule comprenant au moins une bande profilée (1, 2) s'étendant dans la direction périphérique de la bande de roulement en tant que profil positif, qui est limitée au niveau d'au moins un côté par une rainure périphérique (3, 3') s'étendant dans la direction périphérique, selon l'une quelconque des revendications 1 à 4, **caractérisé en ce que** dans la bande profilée (1, 2), les rainures (4) constituées de portions de rainure (5, 6) s'étendant en forme de V l'une par rapport à l'autre sont disposées en deux ou trois rangées s'étendant sur le pourtour dans la direction périphérique.

6. Pneumatique de véhicule comprenant une bande profilée (2) s'étendant sur le pourtour dans la direction périphérique, limitée des deux côtés par des rainures périphériques (3, 3'), selon l'une quelconque des revendications 1 à 5, **caractérisé en ce que** dans la bande profilée (2), les rainures (4) constituées des portions de rainure (5, 6) s'étendant en forme de V l'une par rapport à l'autre, sont disposées en deux rangées, les pointes du V étant tournées dans chaque rangée de manière à coïncider avec le milieu de la bande profilée.

7. Pneumatique de véhicule selon la revendication 6, **caractérisé en ce que** l'orientation des portions de rainure plus longues et plus courtes (5, 6) des rainures (4) dans l'une des rangées est opposée à celle des portions de rainure (5, 6) des rainures (4) dans l'autre rangée.

8. Pneumatique de véhicule comprenant une bande profilée (1) s'étendant du côté de l'épaulement, qui est limitée du côté intérieur de la bande de roulement par une rainure périphérique (3), selon l'une quelconque des revendications 1 à 5, **caractérisé en ce que** dans la bande profilée (2), les rainures (4) constituées de portions de rainure (5, 6) s'étendant en forme de V l'une par rapport à l'autre, s'étendent en trois rangées, dans chaque rangée les pointes du V de toutes les rainures (4) étant tournées vers la rainure périphérique (3).

9. Pneumatique de véhicule selon la revendication 8, **caractérisé en ce que** les rainures (4) dans la rangée centrale sont décalées dans la direction périphérique par rapport aux rainures (4) des deux autres rangées.

10. Pneumatique de véhicule selon la revendication 8 ou 9, **caractérisé en ce que** les portions de rainure plus longues et plus courtes (5, 6) des rainures (4) dans la rangée centrale sont orientées à l'opposé de chacune des rainures (4) dans les deux autres rangées.
